# EUROPÄISCHE PATENTANMELDUNG

(11) **EP 3 121 665 A1**
(43) Veröffentlichungstag der Anmeldung: **25.01.2017**
(21) Anmeldenummer: 16001300.9
(22) Anmeldetag: 09.06.2016
(51) Int. Cl.: G05B 15/02

(54) **VERFAHREN ZUM BETRIEB EINER ANTRIEBSVORRICHTUNG SOWIE EINE ANTRIEBSVORRICHTUNG MIT EINEM SOLCHEN VERFAHREN**

(30) Priorität: 20.07.2015 DE 102015009127
(71) Anmelder: Novoferm Tormatic GmbH, Eisenhüttenweg 6 DE-44145 Dortmund (DE)
(72) Erfinder: Glanz, Michael, D 40764 Langenfeld (DE)

(57) **Zusammenfassung**

Die Erfindung betrifft ein Verfahren zum Betrieb eines durch eine Antriebsvorrichtung automatisierten Tores oder einer Tür unterschiedlichster Bauart mit einer in mindestens einem Speicher einer elektronischen Steuereinheit gespeicherten Betriebssoftware der verwendeten Tor- oder Türausführung, wobei in einem virtuellen Speicher die für den Betrieb von verschiedenen Torausführungen oder Türausführungen spezifische Anwendersoftware und/oder Softwareupdates und/oder Betriebsparameter gespeichert werden, die durch ein externes ortsunabhängiges Datenübertragungsgerät abgerufen und über ein Funkverfahren zur Antriebsvorrichtung des Tores oder der Tür in mindestens einen Speicher bidirektional übertragen und implementiert werden.

## Beschreibung

Die Erfindung betrifft ein Verfahren zum Betrieb eines mittels einer Antriebsvorrichtung automatisierten Tores oder einer Tür mit einer, in mindestens einem Speicher einer elektronischen Steuerungseinheit gespeicherten Betriebssoftware, sowie einer zu dem verwendeten Tortyp oder Türtyp ausgerichteten Anwendersoftware. Des Weiteren wird eine Antriebsvorrichtung beansprucht, die eine Ausführung des Verfahrens gewährleistet.

Die DE 203 12 018 U1 beschreibt eine Steuerungseinheit, die ortsfest zum Betrieb bei einer Torantriebseinheit verwendbar ist. Die Steuereinheit weist dabei eine Schnittstelle zur Aufnahme von Programmiersignalen auf. Weiterhin ist eine Programmiereinheit zur Fernprogrammierung der Torantriebseinheit über deren Schnittstelle vorgesehen. Die Programmiereinheit kann an einem anderen Ort mit den entsprechenden Parametern programmiert werden. Danach wird anschließend diese programmierte Programmiereinheit zu der Torantriebssteuerung gebracht und die einprogrammierten Parameter auf das Tor übertragen. Zur Realisierung der Übertragung kann die Programmiereinheit elektronisch mit der Torantriebssteuerung verbunden werden. Bei einer entsprechenden Ausgestaltung der Torantriebssteuerung und Verbindung mit einem Datenverarbeitungsnetz kann die Verbindung zwischen Programmiereinheit und Antriebssteuerung auch über Telefon, ein lokales Datenverarbeitungsnetz oder das Internet geschehen. Bei einer bidirektionalen Ausgestaltung ist es möglich, zusätzlich zur Programmierung der Torantriebssteuerung dessen Status von der Programmiereinheit aus abzufragen und zu überwachen.

Bei einer Reihe von Antriebsvorrichtungen für Tore oder Türen ist es möglich, Betriebssysteme und Anwenderprogramme in einem nicht flüchtigen Speicher der Steuerungseinheit zu speichern. Das BIOS wird in einem nichtflüchtigen Festkörperspeicher gespeichert, Programme und Daten, die einer Rechnervorrichtung zugeordnet sind, werden dabei als Firmware bezeichnet. Eine Firmware kann in einem Nur-Lese-Speicher gespeichert werden. Das Korrigieren von Defekten oder das Verbessern der Firmware kann üblicherweise nur durch das Ersetzen des Nur-Lese-Speichers ausgeführt werden. Dieses ist sehr unbequem und darüber hinaus teuer, wenn es sich um Antriebsvorrichtungen handelt, die an unterschiedlichen Orten installiert sind. Es ist jedoch auch möglich, die Firmware in einem überschreibbaren, nicht flüchtigen Speicher abzulegen.

Es sind Kommunikationssysteme und Verfahren zur Datenübertragung bekannt, die über große Entfernungen dem Besitzer eines mobilen Endgerätes die Überwachung eines Tores oder dergleichen ermöglichen.

Die Aufgabe der Erfindung besteht darin, den Betrieb und die Installation von automatisierten Toren oder Türen dahingehend zu verbessern, dass bei einer Installation von Toren oder Türen unabhängig vom Montageort ein schneller Zugriff auf aktuelle Betriebsmittel und Informationen möglich ist, darüber hinaus soll auch die Verwaltung von Informationen und Programmen generalisiert und damit vereinfacht werden.

Die Aufgabe der Erfindung wird durch Verfahren nach Anspruch 1 sowie durch eine Vorrichtung nach Anspruch 8 gelöst.

Für die Installation und den Betrieb eines durch eine Antriebsvorrichtung automatisierten Tores oder einer Tür wird ein Verfahren verwendet, bei dem in mindestens einem Speicher einer elektronischen Steuerungseinheit für den Betrieb der Antriebsvorrichtung eine Betriebssoftware oder Firmware gespeichert ist.

Unter verschiedenartigen Tortypen oder Türtypen und deren modifizierten Ausführungsformen werden grundsätzlich alle Bauarten verstanden deren Aufbau und auch deren Betriebsablauf unterschiedlich ausführbar sind. Um für derartige unterschiedliche Tortypen oder Türtypen die notwendigen und stets aktuellen Anwendungsprofile ausführen zu können, ist neben der Betriebssoftware eine spezielle Anwendersoftware notwendig, die innerhalb der Antriebsvorrichtung gespeichert wird. Derartige Anwendersoftware ist heutzutage durch sich schnell ändernde Vorschriften bzw. Sicherheitsmaßnahmen einem großen Änderungsdienst unterlegen. Dieses bedeutet, dass neben Updates der Software auch komplett neue Anwendersoftware zur Verfügung gestellt werden muss. Dieses erfordert einen großen Aufwand, nicht nur hinsichtlich der Speicherung in verschiedenen kabelbehafteten bzw. funkbetriebenen Programmiergeräten, sondern der Änderungsdienst ist nur mit einem großen Aufwand zu realisieren.

Aus den vorgenannten Gründen wird deshalb die Anwendersoftware oder Softwareupdates neben kundenspezifischen Daten und Betriebsdaten für die unterschiedlichen Tortypen bzw. Türtypen in einem virtuellen Speicher, der von jedem Ort aus erreichbar ist, bereitgestellt. Als virtueller Speicher wird dabei ein entferntes Rechen- oder Speicherzentrum angesehen, das nicht auf einem lokalen Arbeitsplatzcomputer oder Server eine Speicherung ausführt. Dieses bedeutet eine abstrahierte Infrastruktur hinsichtlich von Rechenkapazitäten, Datenspeichern sowie Netzwerkkapazitäten für die Software, die zum reibungslosen Betrieb von automatisierten Toren und Türen notwendig ist. Dabei ist diese Zurverfügungstellung aus dem virtuellen Speicher an den direkten Bedarf angepasst und wird über ein Netzwerk zur Verfügung gestellt. Das bedeutet für den Benutzer, dass die Kommunikation auf funkbasierter Basis durchgeführt wird. Um einen Zugriff auf derartige Daten bzw. Anwendersoftware zu bekommen, ist es notwendig, dass zuvor eine Identifikation der entsprechenden Person durchgeführt wird. Ein solcher Zugriff auf einen virtuellen Speicher ist beispielsweise über das Internet möglich. Bei firmeninternen Netzwerken kann dieses auch über das Intranet erfolgen. Dieses ist insbesondere bei großen Tor- oder Türanlagen, die in einer mehrfachen Anzahl, beispielsweise innerhalb eines oder mehrerer Gebäude installiert sind, von großer Bedeutung. Der virtuelle Speicher ist somit von tatsächlichen Arbeitsspeicher der Antriebsvorrichtung getrennt und unabhängig. Dadurch ist der gleichzeitige Zugriff über mehrere IP-Adressen möglich. Gesichert werden die Zugriffsberechtigungen auf Programme, Daten oder dergleichen beispielsweise durch SSL/TLS-Verschlüsselungen.

Unter Daten bzw. Betriebsparametern werden all die Angaben verstanden, die für einen ordnungsgemäßen Betrieb eines Tores oder einer Tür notwendig sind. Darüber hinaus sind auch derartige Daten von Interesse, die sich aus dem Betrieb und der Umgebung einer Tür oder eines Tores ergeben, um so beispielsweise Serviceeinsätze und darüber hinaus Personen- und Sachbeschädigungen zu vermeiden.

Die Kommunikation mit dem virtuellen Speicher wird durch ein externes, nicht kabelgebundenes Datenübertragungsgerät aufrechterhalten. Die so aus dem virtuellen Speicher empfangenen Informationen lassen sich über eine Funkverbindung zu der Antriebsvorrichtung übertragen und in entsprechenden Speichern innerhalb der Steuerungseinheit implementieren. Eine solche Vorgehensweise spart neben Kapazitäten von Montagepersonal auch deren Einsatzzeit an den Einsatzorten. Dadurch, dass in dem virtuellen Speicher stets die aktuellen Profile von Türen und Toren mit sämtlichen Parametern hinterlegt sind, kann es nicht zu einer Falschinstallation bzw. zu einer falschen Änderung der Anwendersoftware an einer bestimmten Antriebsvorrichtung kommen. Dieses trifft auch für Softwareupdates zu.

Ebenso ist es möglich, dass die aus der Antriebsvorrichtung mit seiner elektronischen Steuereinheit herausgelesenen Daten und Informationen bzw. Parameter in umgekehrter Richtung, d. h. bidirektional, herausgelesen und in dem virtuellen Speicher der bestimmten Antriebsvorrichtung zugeordnet werden können. Dadurch ist eine umfassende und sicherheitsbezogene Überwachung des Montageortes jederzeit möglich. Aus diesen herausgelesenen Informationen können sich schon frühzeitig Serviceeinsätze abzeichnen, da beispielsweise aufgrund der empfangenen Daten auf einen vorzeitigen Verschleiß von Bauteilen Bezug genommen werden kann.

Bei der vorliegenden Vorrichtung und dem Verfahren handelt es sich nicht um eine ausschließliche Ferndiagnose bzw. Ferninstallation, vielmehr ist es zur Daten- und Softwareänderung notwendig, dass sich eine autorisierte Person in der Nähe der Antriebsvorrichtung aufhalten muss. Dadurch wird den örtlichen Gegebenheiten Rechnung getragen, was sich auch in einer Vermeidung von Unfällen niederschlagen kann. Die Person hat bei dieser Vorgehensweise immer mit dem Tor oder der Tür einen Sichtkontakt sicherzustellen.

Zur Datenübertragung mit einem mobilen Datenübertragungsgerät wird vorzugsweise von einem Industriestandard gemäß IEEE 802.15.1 Gebrauch gemacht. Dieser Industriestandard beinhaltet ein Funkverfahren, das zwischen zwei Geräten über kurze Distanzen eine sichere Verbindung ermöglicht, was beispielsweise mit einer Bluetoothverbindung erreicht werden kann. Um hohe Übertragungsraten ausführen zu können, kann dieses auch in einem WLAN-Standard erfolgen. Dabei werden auf eine sogenannte Paketvermittlungen oder eine asynchrone Verbindungen bei den Übertragungseinrichtungen zurückgegriffen. Ein Bluetooth-Protokoll unterstützt einen asymmetrischen Datenaustausch in bidirektionaler Richtung.

Eine Verbindung zwischen einer Antriebsvorrichtung und einem mobilen Datenübertragungsgerät erfolgt bei Bluetooth unter einer Protokollarchitektur. Dieses bedeutet, dass die Verbindung von einem beliebigen Gerät ausgehen kann, das dadurch zum "Master" über die antwortenden "Slaves" erhoben wird. Ein weiterer Vorteil der Bluetooth-Architektur liegt darin, dass sich bluetoothfähige Geräte im Betrieb innerhalb kürzester Zeit selbst identifizieren können, was einen großen Sicherheitsstandart garantiert.

Bei der Abfrage aus dem virtuellen Speicher wird das Datenpaket beispielsweise aus Betriebsparametern oder -software über ein Netzwerk aus dem virtuellen Speicher abgerufen. Dieses Netzwerk, in Form des Internets, ist an jedem Punkt der Erde verfügbar, so dass keine speziellen Einrichtungen hinsichtlich der Anwendbarkeit der mobilen Datenübertragungsgeräte notwendig sind.

Als ein mobiles Datenübertragungsgerät sind Kleingeräte anzusehen, die auch als Mobiltelefone oder Tablets verwendet werden können. Hierunter fällt ein iPad ebenso wie ein Smartphone. Derartige Geräte weisen einen berührungsempfindlichen Bildschirm auf, der eine schnelle Kommunikation gewährleistet.

## Patentansprüche

1. Verfahren zum Betrieb eines durch eine Antriebsvorrichtung automatisierten Tores oder einer Tür unterschiedlichster Bauart mit einer in mindestens einem Speicher einer elektronischen Steuereinheit gespeicherten Betriebssoftware der verwendeten Tor- oder Türausführung, **dadurch gekennzeichnet, dass** in einem virtuellen Speicher die für den Betrieb von verschiedenen Torausführungen oder Türausführungen spezifische Anwendersoftware und/oder Softwareupdates und/oder Betriebsparameter gespeichert werden, die durch ein externes ortsunabhängiges Datenübertragungsgerät abgerufen und über ein Funkverfahren zur Antriebsvorrichtung des Tores oder der Tür in mindestens einen Speicher bidirektional übertragen und implementiert werden.

2. Verfahren nach Anspruch 1, **dadurch gekennzeichnet, dass** das Datenübertragungsgerät mittels des Funkverfahrens Speicherinhalte oder Betriebsdaten aus dem mindestens einen Speicher der elektronischen Steuerung auslesen und in den virtuellen Speicher übertragen kann, die dem Installationsort des Tores oder der Tür zugeordnet gespeichert werden.

3. Verfahren nach Anspruch 1 oder 2, **dadurch gekennzeichnet, dass** bei einer Installation eines Tores oder einer Tür die Anwendersoftware oder Betriebsparameter des betreffenden Tortypes oder des betreffenden Türtyps mit dem Datenübertragungsgerät am Installationsort des Tores oder der Tür aus dem virtuellen Speicher abgerufen und zu der elektronischen Steuerung der Antriebsvorrichtung übertragen und dort gespeichert werden.

4. Verfahren nach einem der Ansprüche 1 bis 3, **dadurch gekennzeichnet, dass** Softwareupdates der Anwendersoftware tortypenoder türtypenspezifisch aus dem virtuellen Speicher durch das Datenübertragungsgerät am Ort des Tores oder der Tür abgerufen und zu der elektronischen Steuerung der Antriebsvorrichtung übertragen und gespeichert werden.

5. Verfahren nach einem der vorhergehenden Ansprüche, **dadurch gekennzeichnet, dass** die Datenübertragung über den Industriestandard gemäß IEEE 802.15.1 erfolgt, vorzugsweise in einer Ausführung als Bluetooth.

6. Verfahren nach einem der vorhergehenden Ansprüche, **dadurch gekennzeichnet, dass** die Betriebsparameter und/oder Anwendersoftware aus dem virtuellen Speicher über ein Netzwerk, vorzugsweise über das Internet oder ein Intranet abgerufen werden.

7. Verfahren nach den vorhergehenden Ansprüchen, **dadurch gekennzeichnet, dass** als Datenübertragungsgerät mobile Kleingeräte, wie Mobiltelefone oder Tablets, insbesondere Smartphones oder iPads, eingesetzt werden.

8. Antriebsvorrichtung für ein automatisiertes Tor oder eine Tür mit einer elektronischen Steuerungseinheit, die mindestens einen Speicher umfasst, in dem eine Betriebssoftware gespeichert ist, sowie eine zu dem Tor oder der Tür passenden veränderbaren Anwendersoftware, **dadurch gekennzeichnet, dass** die Antriebsvorrichtung eine integrierte Kommunikationsschnittstelle beinhaltet, die einen kontaktlosen Datentransfer mit einem externen Datenübertragungsgerät ermöglicht, wobei der Datentransfer über ein Netzwerk zu einem virtuellen Speicher ausführbar ist.

9. Antriebsvorrichtung nach Anspruch 8, **dadurch gekennzeichnet, dass** die kontaktlose Datenübertragung mit dem Industriestandard gemäß IEEE 802.15.1 ausführbar ist.
